# FASCICULE DE BREVET EUROPEEN

(11) **EP 0 656 528 B1**
(45) Date de publication et mention de la délivrance du brevet: **06.05.1998**
(21) Numéro de dépôt: 94810681.0
(22) Date de dépôt: 01.12.1994
(51) Int. Cl.: G01F 11/02, G01F 11/16

(54) **Dispositif de dosage modulaire**
Modulares Dosiergerät
Modular closing device

(30) Priorité: 03.12.1993 CH 3620/93
(43) Date de publication de la demande: 07.06.1995
(73) Titulaire: HORMEC TECHNIC SA, 2560 Nidau (CH)
(72) Inventeur: Reich, Léon, CH-2560 Nidau (CH)
(74) Mandataire: Fischer, Franz Josef

(56) Documents cités:
- EP-A- 0 133 292
- CH-A- 664 440
- FR-A- 2 455 269
- FR-A- 2 493 418
- FR-A- 2 584 894
- FR-A- 2 647 214

## Description

La présente invention concerne un dispositif de dosage modulaire simple ou multiple, permettant de fournir des doses calibrées précises d'une substance pâteuse quelconque, notamment un lubrifiant.

Le brevet suisse 664440-5, du même demandeur, décrit un doseur volumétrique permettant de fournir des doses très précises. Ce dispositif de dosage est de construction monobloc, ce qui diminue considérablement la flexibilité d'utilisation. Ainsi, si on souhaite modifier une dose, tout le dispositif doit être interchangé. D'autres dispositifs de type connu ont une tête de dosage ajustable, par exemple à l'aide d'un piston réglable. Dans ce cas, seule la tête de dosage ajustable permet un ajustement, en variant la course du piston. La gamme d'ajustement ainsi permise est très limitée. Dès qu'une dose doit être modifiée de façon plus importante que ce qui est possible par la variation de la course du piston, il faut changer le doseur, pour en utiliser un autre dont le diamètre du piston de dosage correspond à la nouvelle dose recherchée. Cela implique que l'utilisateur dispose d'une multitude de doseurs de différentes capacités, ce qui occasionne des coûts importants.

Le but principal de la présente invention est de proposer un dispositif de dosage modulaire permettant une très grande flexibilité d'utilisation, une grande précision et offrant de très vastes possibilités de combinaisons dans les cas où plusieurs doses doivent être fournies simultanément. Ce but est atteint grâce aux moyens revendiqués.

Le dispositif de dosage modulaire selon la présente invention permet de fournir un très grand éventail de doses avec un seul dispositif. La modularité permet d'interchanger des modules de dosage ayant différents diamètres de pistons, correspondant à des doses plus ou moins importantes. En réutilisant la plupart des éléments constituants du dispositif, on obtient un coût de revient plus avantageux. De plus, le doseur modulaire multiple permet de doser, de façon très précise, différents constituants de graisse, de colle, etc. Le doseur multiple selon la présente invention est de conception simple et économique puisque les têtes de dosage sont entraînées simultanément par un seul mécanisme.

L'invention est exposée ci-après de façon plus détaillée, à l'aide du dessin annexé comprenant les figures suivantes:
la figure 1 représente une coupe schématique partielle en élévation d'un dispositif de dosage modulaire simple selon la présente invention, où le module interchangeable désassemblé est reproduit en pointillé;
la figure 2 représente une vue schématique de dessus d'un dispositif de dosage modulaire multiple selon la présente invention,
la figure 3 (a, b, c, d) représente schématiquement les différentes étapes de fonctionnement du dispositif selon l'invention.

Sur ces figures, des références identiques désignent des éléments semblables.

La description qui suit concerne plus spécifiquement un dispositif de dosage pour lubrifiant (huile, graisse) mais le dispositif convient également pour une multitude d'autres substances pâteuses ou visqueuses devant être appliquées sous forme de doses précises, souvent en petite quantité.

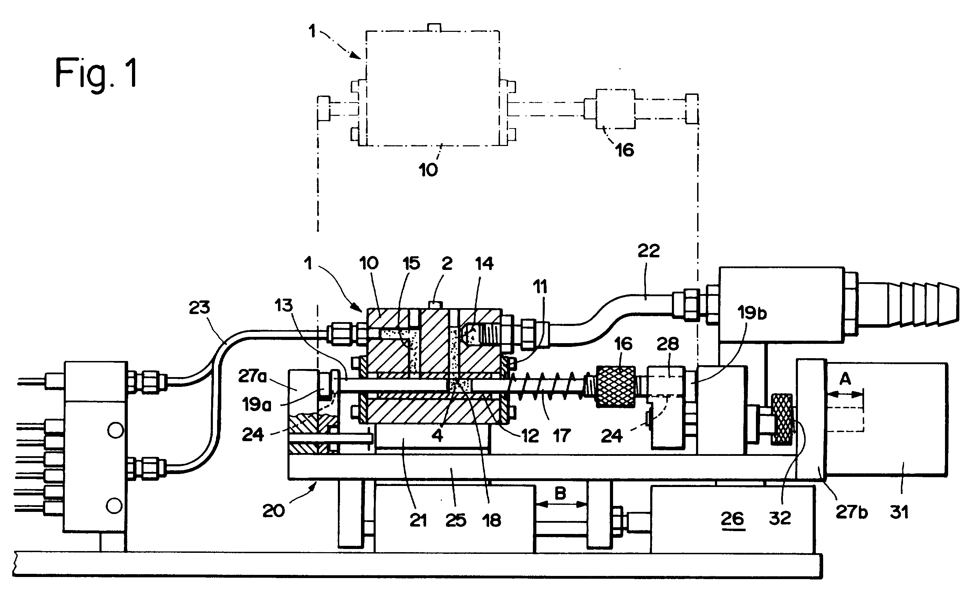

Le module de dosage interchangeable 1 comprend un corps principal 10, de préférence en aluminium, mais pouvant également être fabriqué à partir de tout autre matériau métallique, composite, plastique, etc. Un canal est pratiqué à travers le corps principal. Une douille d'ajustement 12, de préférence tubulaire et en alliage métallique dur ou en céramique, est disposée à l'intérieur du canal et définit un logement dans lequel prend place une goupille d'obturation 13, ainsi que le piston 17. Sur la figure 1, la douille d'ajustement 12 est maintenue à chaque extrémité du corps principal par des moyens de maintien 11 de type connu (sur la figure 1, une plaque métallique vissée contre le corps principal 10) pour éviter que la douille coulisse dans le corps principal, et éventuellement afin d'améliorer l'étanchéité. La douille pourrait également être simplement collée ou soudée dans le corps principal. Un piston de dosage 17, entraîné par l'écrou de réglage 16, lui-même actionné par un bloc de commande 31, est ajusté à l'intérieur de la douille d'ajustement 12. La course du piston, illustrée par la flèche A, permet l'admission et l'éjection du produit à doser dans ou de la chambre de dosage 4. Cette chambre est délimitée d'un côté par le piston 17, et de l'autre par la goupille d'obturation 13. L'écrou de réglage 16, réglable par vissage, permet de diminuer ou d'augmenter la quantité à doser 3 contenue dans la chambre de dosage 4. Un canal d'admission 14 et un canal d'éjection 15, sont pratiqués à travers le corps principal 10. Le premier est situé de préférence en amont et relie la chambre de dosage 4 à une source d'alimentation 22. Le second est disposé en aval et relie la chambre de dosage 4 à la canalisation de distribution 23. Les moyens d'actionnement 20, comprenant une portion fixe et une portion mobile pouvant se déplacer grâce à des éléments coulissants de type connus, permettent de déplacer l'ensemble formé par l'écrou de réglage 16, la goupille d'obturation 13 et le piston de dosage 17, par rapport au corps principal 10. Ce mouvement relatif entre la goupille d'obturation 13 et le corps principal 10, selon une course B, permet de placer la chambre de dosage 4 soit vis-à-vis le canal d'admission 14, soit vis-à-vis le canal d'éjection 15, afin de pouvoir respectivement remplir ou vider ladite chambre.

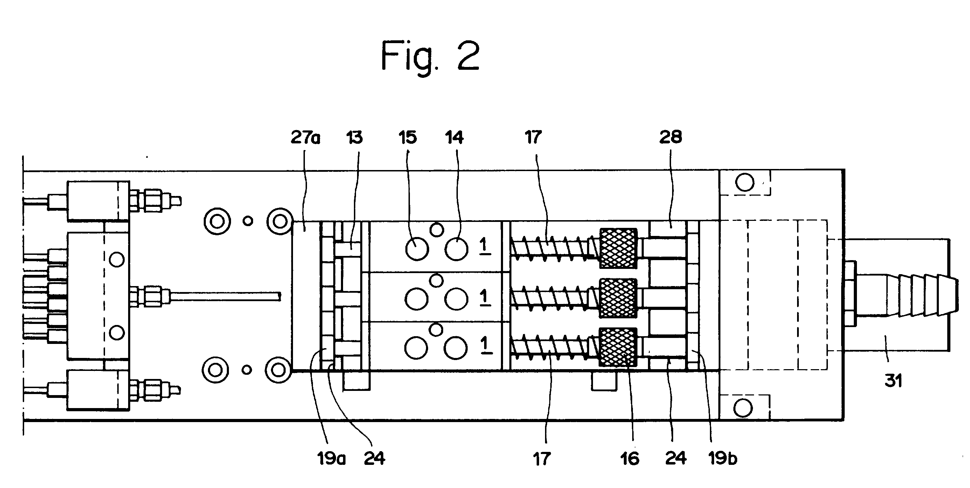

Lesdits moyens 20 comprennent un support mobile 25 actionné par des moyens de déplacement latéral 26, comme par exemple un jeu de vérins de type connu ou tout autre moyen électrique, hydraulique ou manuel permettant de déplacer latéralement ledit support 25. Des blocs de fixation 27a et 27b sont disposés aux embouts du support. Le premier de ces blocs 27a sert à maintenir l'extrémité libre de la goupille d'obturation grâce à une fente de positionnement 24 (figure 2) dans laquelle est disposé ladite goupille. La tête 19a de la goupille d'obturation est ainsi en prise axiale par le premier bloc de fixation 27a. L'autre bloc 27b sert de point de fixation pour le bloc de commande 31. Les déplacements de l'écrou de réglage 16 et du support mobile 25, respectivement sous l'action du bloc de commande 31 et des moyens de déplacement latéral 26, sont réalisés au moyen d'une commande automatique, de manière préférentielle de type pneumatique, permettant d'obtenir des vitesses d'opération très avantageuses. Par ailleurs, tout autre type de moyen, comme par exemple électrique ou hydraulique, peut également être utilisé. Un support coulissant 28, relié mécaniquement au bloc de commande 31 par une tige de commande 32, est disposé sur le support 25, de façon à pouvoir se déplacer latéralement sur le support mobile 25 sous l'action du bloc de commande 31. Le support coulissant 28 sert à son tour de point de fixation non permanent pour l'autre tête 19b du piston de dosage 17, qui est fixée de façon similaire à la première tête, grâce à une fente de positionnement 24 pratiquée sur le support coulissant 28.

La partie fixe des moyens 20 comprend un corps de fixation 21, sur lequel est disposée la portion inférieure du corps principal 10. L'assemblage non permanent de ces deux éléments est assuré par au moins un moyen d'assemblage 2, de manière préférentielle un moyen mis en place par vissage. Le corps de fixation 21 maintient le corps principal 10 fixe lors du déplacement du support mobile 25. On obtient ainsi ledit mouvement relatif entre la goupille d'obturation 13 le corps principal 10. Par ailleurs, le type de fixation utilisé pour maintenir les têtes 19a et 19b de la goupille d'obturation 13 et du piston de dosage 17, permet, par un simple déplacement vertical de ces éléments, de les retirer ou de les insérer avec la plus grande facilité.

La modularité du dispositif de dosage selon la présente invention permet d'interchanger le module de dosage 1 avec la plus grande simplicité, en fonction de la capacité de dosage recherchée. Grâce à l'utilisation de moyens d'assemblage 2 non permanents, de manière préférentielle vissés, et à la fixation non permanente des têtes d'entraînement 19a et 19b, il est possible de réaliser un assemblage et un désassemblage très rapide du module interchangeable 1. On peut sélectionner, parmi une famille de modules 1, comportant chacun une douille d'ajustement 12, une goupille d'obturation 13 et un piston de dosage 17 de diamètre différent, le module ayant la capacité correspondant au dosage à effectuer. L'écrou de réglage 16 permet d'affiner l'ajustement de la dose de façon très précise, par simple vissage. Le module interchangeable comprend un minimum de pièces et son coût de revient est avantageux par rapport au reste du dispositif.

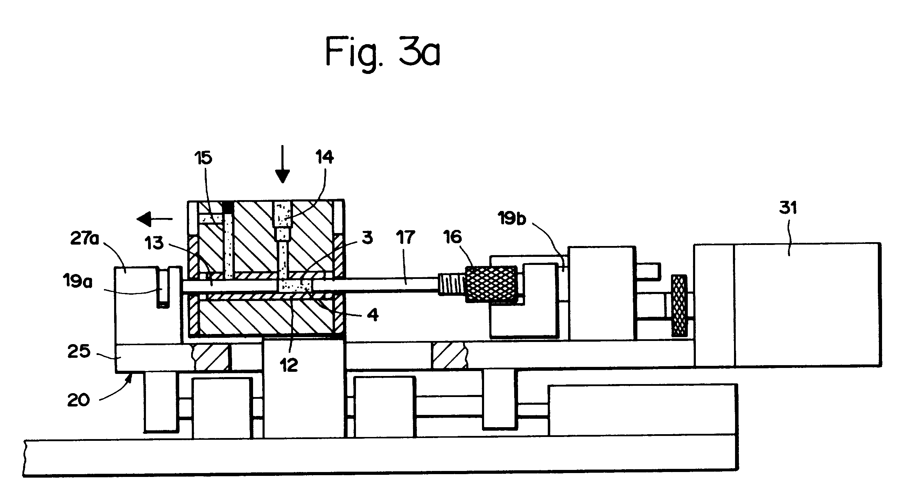

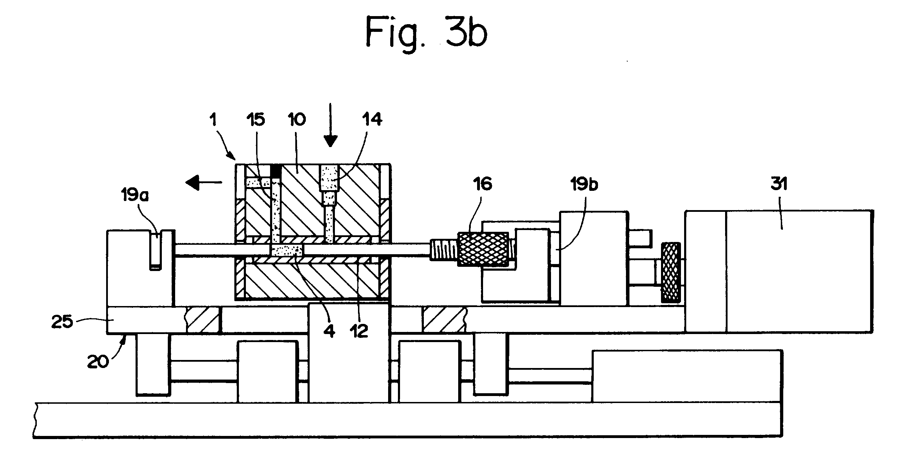

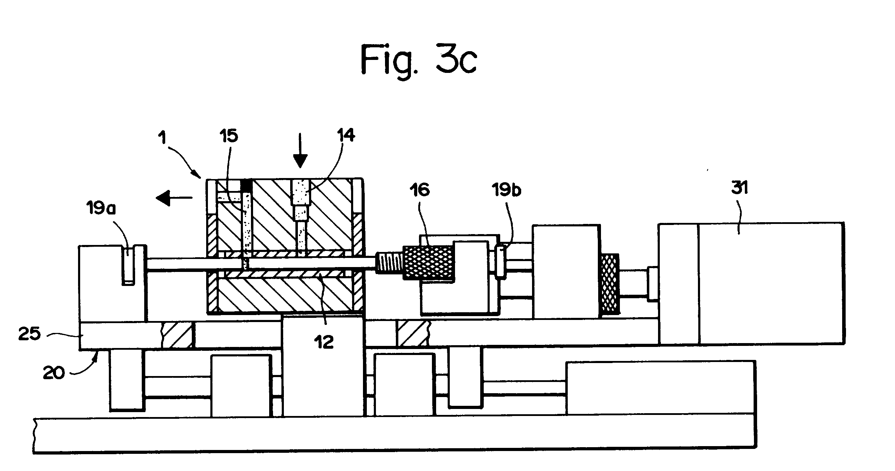

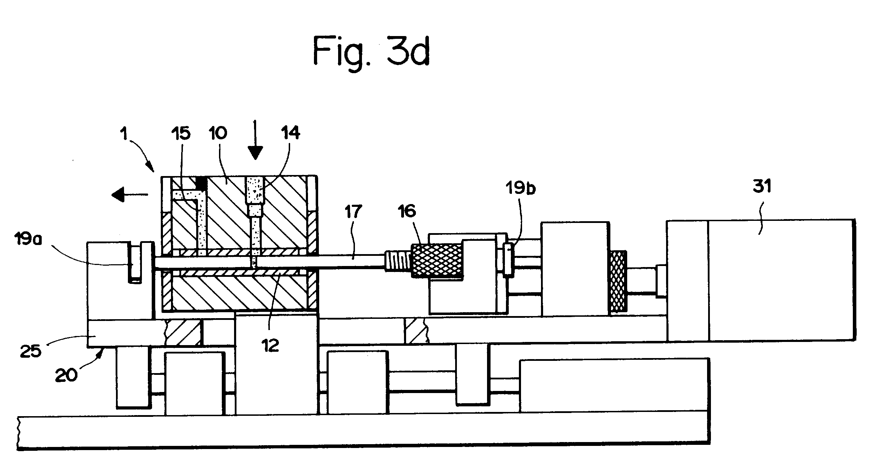

Le dispositif de dosage fonctionne de façon similaire à celui décrit dans la demande préalablement citée. La figure 3 permet d'illustrer ce fonctionnement: tout d'abord, à la figure 3a, le moyen d'actionnement 20 est en position tirée. La chambre de dosage 4 est alors positionnée de sorte qu'elle soit alignée avec le canal d'admission 14. La graisse peut alors être admise dans cette chambre lorsque le piston 17 est déplacé en amont. A la figure 3b, le moyen d'actionnement est en position poussée. La chambre de dosage 4 est alors positionnée de sorte qu'elle soit alignée avec le canal d'éjection 15. La dose de graisse peut alors être éjectée de ladite chambre, par déplacement en aval du piston de dosage 17 selon la course réglée par l'écrou 16, comme illustré à la figure 3c. Pour achever le cycle d'opération du dispositif, le moyen d'actionnement 20 est replacé en position tirée, tel qu'illustré par la figure 3d. L'accès au canal d'admission 14 est alors à nouveau libéré et la graisse sous pression peut à nouveau remplir la chambre de dosage 4.

La figure 2 illustre une deuxième forme d'exécution selon la présente invention, où il est possible de disposer en parallèle plusieurs modules interchangeables 1, par exemple dans le but de réaliser des mélanges où les substances à combiner doivent être dosées de façon très précise. Le bloc de commande 31 relie les têtes d'entraînement, qui sont ainsi actionnées simultanément par la tige de commande 32. Un seul moyen d'entraînement 31 suffit alors pour actionner une multiplicité de pistons. Tout comme sur les dispositifs de type connus, cette tige est actionnée automatiquement, de manière préférentielle au moyen d'une commande de type pneumatique. Suivant une construction similaire au dispositif de dosage de la figure 1, le dispositif de la figure 2 est également modulaire, grâce à l'interchangeabilité des modules 1. Les avantages de cette modularité sont encore plus appréciables pour un dispositif multiple: on peut assortir des modules comprenant des éléments de dimensions différentes selon une quasi-infinité de possibilités, afin de réaliser un ou plusieurs mélanges, des plus simples aux plus complexes. L'ajustement de la course du piston, ainsi que le diamètre plus ou moins grand des différents éléments permettent en effet une très grande flexibilité.

## Revendications

1. Dispositif de dosage caractérisé en ce qu'il comprend un corps principal (10), dans lequel est disposé une douille d'ajustement (12) délimitant une ouverture traversant ledit corps, une goupille d'obturation (13), disposée partiellement et de façon mobile dans ladite douille, un piston de dosage (17), disposé partiellement et de façon mobile dans ladite douille à l'opposé de la goupille d'obturation (13), une chambre de dosage (4) mobile et de volume variable étant délimitée par la paroi interne de la douille (12), la goupille (13) et le piston (17), au moins un canal d'admission (14) et un canal d'éjection (15), chacun relié de façon indépendante à la chambre de dosage (4) afin de permettre l'admission et l'expulsion de la substance à doser, au moins un bloc de commande (31) permettant de déplacer le piston de dosage (17) afin de remplir ou vider ladite chambre (4), des moyens d'actionnement (20) permettant de déplacer simultanément ladite goupille d'obturation et ledit piston par rapport audit corps principal de façon à libérer l'accès soit au canal d'admission (14), soit au canal d'éjection (15), et en ce que le corps principal (10), la goupille d'obturation (13) et le piston de dosage (17) constituent un module interchangeable (1) fixé au moyen d'actionnement par des moyens d'assemblage (2) non permanents.

2. Dispositif de dosage selon la revendication 1, dans lequel lesdits moyens d'assemblage (2) sont vissés.

3. Dispositif de dosage selon l'une des revendications 1 ou 2, dans lequel lesdits moyens d'actionnement (20) comprennent un support mobile (25) actionné par des moyens de déplacement latéral (26) servant å déplacer latéralement la goupille d'obturation (13) et le piston de dosage (17), et où un corps de fixation (21) maintient ledit corps principal fixe lors de ce déplacement.

4. Dispositif de dosage selon l'une des revendications 1 à 3, dans lequel le bloc de commande (31) est fixé au support mobile (25).

5. Dispositif de dosage selon l'une des revendications précédentes, dans lequel lesdits moyens de déplacement latéral (26) sont de type pneumatique.

6. Dispositif de dosage selon l'une des revendications précédentes, dans lequel ledit bloc de commande (31) est de type pneumatique.

7. Dispositif de dosage selon l'une des revendications précédentes, dans lequel la goupille d'obturation (13) et le piston (17) coopèrent avec les moyens d'actionnement (20) grâce à l'insertion non permanente des têtes d'entraînement (19a, 19b) de chacun de ces éléments dans les fentes de positionnement (24) pratiquées sur des blocs de fixation (27) du support mobile (25).

8. Dispositif de dosage selon l'une des revendications précédentes, caractérisé en ce qu'un écrou de réglage (16) est disposé entre chaque piston (17) et le bloc de commande (31), permettant de modifier la course de chaque piston de façon indépendante.

9. Dispositif de dosage selon l'une des revendications 1 à 8, caractérisé en ce qu'il comprend un seul module interchangeable (1).

10. Dispositif de dosage selon l'une des revendications 1 à 8, caractérisé en ce qu'il comprend plus d'un module interchangeable (1).

## Patentansprüche

1. Dosiervorrichtung, gekennzeichnet durch einen Hauptkörper (10), in welchem eine Justierhülse (12) angeordnet ist, welche eine Öffnung begrenzt, die den genannten Körper durchquert, einen Verschlussstift (13), der teilweise und auf bewegliche Art in dieser Hülse angeordnet ist, einen Dosierkolben (17), der teilweise und auf bewegliche Art in der genannten Hülse gegenüberliegend dem Verschlussstift (13) angeordnet ist, eine bewegliche Dosierkammer (4) mit variablem Volumen, die durch die innere Wand der Hülse (12), den Stift (13) und den Kolben (17) begrenzt ist, mindestens einen Einlasskanal (14) und einen Ausstosskanal (15), von denen jeder auf unabhängige Art mit der Dosierkammer (4) verbunden ist, um den Einlass und die Entfernung der Dosiersubstanz zu ermöglichen, mindestens einen Steuerblock (31), welcher erlaubt, den Dosierkolben (17) zu verschieben, um die genannte Kammer (4) zu füllen oder zu leeren, Antriebsmittel (20), welche es erlauben, gleichzeitig den genannten Verschlussstift und den genannten Kolben in Bezug auf den Hauptkörper zu verschieben, auf solche Weise, um den Zugang entweder zum Zulasskanal (14) oder Ausstosskanal (15) freizugeben und der Hauptkörper (10), der Verschlussstift (13) und der Dosierkolben (17) ein austauschbares Modul (1) bilden, welches an dem Antriebsmittel durch nicht dauernde Verbindungsmittel (2) befestigt ist.

2. Dosiervorrichtung nach Patentanspruch 1, in welcher die genannten Verbindungsmittel (2) geschraubt sind.

3. Dosiervorrichtung nach einem der Patentansprüche 1 oder 2, in welcher die genannten Antriebsmittel (20) einen beweglichen Träger (25) umfassen, der durch seitliche Verschiebungsmittel (26) angetrieben ist, die dazu dienen, den Verschlussstift (13) und den Dosierkolben (17) seitlich zu verschieben und wo ein Festhaltekörper (21) den genannten Hauptkörper anlässlich dieser Verschiebung festhält.

4. Dosiervorrichtung nach einem der Patentansprüche 1 bis 3, in welcher der Steuerblock (31) am beweglichen Träger (25) befestigt ist.

5. Dosiervorrichtung nach einem der vorhergehenden Patentansprüche, in welcher die genannten seitlichen Verschiebungsmittel (26) vom pneumatischen Typ sind.

6. Dosiervorrichtung nach einem der vorangehenden Patentansprüche, in welcher der genannte Steuerblock (31) vom pneumatischen Typ ist.

7. Dosiervorrichtung nach einem der vorangehenden Patentansprüche, in welcher der Verschlussstift (13) und der Kolben (17) mit den Antriebsmitteln (20) zusammenwirken, dank der nicht dauernden Einführung der Antriebsköpfe (19a, 19b) von jedem dieser Elemente in die Positionierspalten (24) vorhanden auf den Befestigungsblöcken (27) des beweglichen Trägers (25).

8. Dosiervorrichtung nach einem der vorangehenden Patentansprüche, dadurch gekennzeichnet, dass eine Einstellmutter (16) zwischen jedem Kolben (17) und dem Steuerblock (31) angeordnet ist, welche erlaubt, den Hub jedes Kolbens auf unabhängige Art zu verändern.

9. Dosiervorrichtung nach einem der Patentansprüche 1 bis 8, dadurch gekennzeichnet, dass sie ein einziges austauschbares Modul (1) umfasst.

10. Dosiervorrichtung nach einem der Patentansprüche 1 bis 8, dadurch gekennzeichnet, dass sie mehr als ein austauschbares Modul (1) umfasst.

## Claims

1. Metering device, characterised in that it comprises a main body (10), in which an adjusting socket (12) is disposed delimiting a bore passing through said body, a stopping pin (13) disposed partially and movably in said socket, a metering piston (17), disposed partially and movably in said socket opposite the stopping pin (13), a metering chamber (4), movable and of variable volume, being delimited by the inner wall of the socket (12), the pin (13) and the piston (17), at least one admission channel (14) and one ejection channel (15), each connected independently to the metering chamber (4) in order to allow the admission and the expulsion of the substance to be metered, at least one control unit (31) allowing the metering piston (17) to be displaced in order to fill or empty said chamber (4), actuating means (20) allowing said stopping pin and said piston to be displaced simultaneously with respect to said main body so as to free the access either to the admission channel (14) or to the ejection channel (15), and in that the main body (10), the stopping pin (13) and the metering piston (17) constitute an interchangeable module (1) fixed to the actuating means by means of detachable assembling means (2).

2. Metering device according to claim 1, wherein said assembling means (2) are screw-type means.

3. Metering device according to one of the claims 1 or 2, wherein said actuating means (20) comprise a movable support (25) actuated by lateral displacement means (26) serving to displace laterally the stopping pin (13) and the metering piston (17), and where a fastening body (21) keeps said main body fixed during this displacement.

4. Metering device according to one of the claims 1 to 3, wherein the control unit (31) is fixed to the movable support (25).

5. Metering device according to one of the preceding claims, wherein said lateral displacement means (26) are of the pneumatic type.

6. Metering device according to one of the preceding claims, wherein said control unit (31) is of the pneumatic type.

7. Metering device according to one of the preceding claims, wherein the stopping pin (13) and the piston (17) co-operate with the actuating means (20) owing to the detachable insertion of driving heads (19a, 19b) of each of these elements in the positioning slots (24) made on fixing blocks (27) of the movable support (25).

8. Metering device according to one of the preceding claims, characterised in that a regulating nut (16) is disposed between each piston (17) and the control unit (31), allowing the stroke of each piston to be changed independently.

9. Metering device according to one of the claims 1 to 8, characterised in that it comprises a single interchangeable module (1).

10. Metering device according to one of the claims 1 to 8, characterised in that it comprises more than cne interchangeable module (1).
